Europäisches Patentamt

European Patent Office

Office européen des brevets

(11) Publication number: **0 419 141 A2**

# EUROPEAN PATENT APPLICATION

(21) Application number: **90310061.8**

(22) Date of filing: **13.09.90**

(51) Int. Cl.⁵: **H04N 7/13**

(30) Priority: **20.09.89 GB 8921265**

(43) Date of publication of application:
**27.03.91 Bulletin 91/13**

(84) Designated Contracting States:
**AT BE CH DE DK ES FR GB GR IT LI LU NL SE**

(71) Applicant: **BRITISH BROADCASTING CORPORATION**
**Broadcasting House**
**London W1A 1AA(GB)**

(72) Inventor: **Knee, Michael James, c/o British Broadcasting**
**Corporation, Research Dept. Kingswood Warren**
**Tadworth, Surrey, KT20 6NP(GB)**

(74) Representative: **Harland, Linda Jane et al**
**c/o Reddie & Grose 16 Theobalds Road**
**London WC1X 8PL(GB)**

(54) **Bit-rate reduction.**

(57) In coding a signal for transmission, the signal is divided into blocks, each containing a similar plurality of samples. Each block is then coded using a coding operation which generates code words of varying length. A plurality of these code words are selected for transmission to form a transmission signal having a predetermined number of bits representing each signal block.

EP 0 419 141 A2

## BIT-RATE REDUCTION

The present invention relates to a scheme for bit-rate reduction in high-definition television (HDTV).

### 1. Constraints on bit-rate reduction schemes for HDTV recording

There are a number of constraints on bit-rate reduction schemes which mean that schemes now being developed for digital point-to-point transmission may not be suitable.

One constraint is that the hardware should be fairly simple, as it will have to work at the HDTV sample rate. This may preclude the use of conventional vector quantization and of motion compensation.

Another constraint is that the bit-rate-reduction processing should not be recursive but that the processing should be independent within each small (preferably one-dimensional) block of pixels. This is necessary in order to enable decoding to begin at any point, for example when the recorder is working in fast replay mode. It is also desirable in order to limit the propagation of errors. This constraint rules out most DPCM (differential pulse code modulation) schemes and anything involving motion compensated prediction.

A third constraint is that the number of bits representing each frame (and preferably each small group of pixels) should be fixed. This would greatly simplify the hardware, again, particularly for fast replay. This constraint would seem to rule out variable-length coding, with its oft-quoted gain of up to 6dB in picture quality for a given bit rate. However, it is possible to meet this third constraint and to benefit from variable-length coding even if the size of the window over which statistical redundancy is exploited is very small, for example, 8 pixels.

### 2. Suggested coding scheme

### 2.1 Transform blocks

A bit-rate reduction scheme in accordance with the invention will now be described in detail, by way of example.

The preferred bit-rate reduction scheme is based on the use of an 8 x 1 Discrete Cosine Transform (DCT), applied to blocks of eight adjacent luminance samples along a line. The invention could, however, be applied directly to blocks of any size, including two-dimensional blocks. The scheme has been tested using Rec. 601 signals, so that the colour difference signals have half the sampling rate of the luminance. Each colour difference block consists of either eight U samples or eight V samples. For the purposes of this investigation, no distinction is made between the statistics of U and of V, each being referred to as the 'UV component'.

### 2.2 Visual weighting

The 8 x 1 DCT is applied to the block, yielding eight transform coefficients. Each coefficient is then multiplied by a visual weighting factor dependent on the visibility of the corresponding spatial frequency. The aim of this multiplication is to obtain a set of coefficients which are of equal importance. Equal quantizing distortions in different coefficients should then be equally visible. (It should be noted that if contribution quality is sought, weighting factors chosen purely on the basis of visibility may not be valid. It seems likely, however, that even in this case some increase in quantizing distortion for the higher frequencies could be tolerated.)

The weighting factors given in Table 1 below are based on factors calculated for zero vertical frequency, that is, the most critical. The factors have been rounded in such a way that the notional range, that is, the range calculated from the largest basis vector which can be represented using eight-bit quantization of each coefficient is a power of 2.

### 2.3 Saving bits by range limiting

When the weighting factors have been applied, eleven bits and a sign are required in general to express each resulting coefficient as an integer. However, most of the coefficients occupy smaller ranges requiring fewer bits to represent them.

Table 2 below denotes with an asterisk all the bits in each coefficient magnitude that were found to take values of '1' in a set of eight still pictures with a probability of more than 0.0001. The dots denote other bits that could theoretically be '1'.

In the proposed coding system, only bits marked with an asterisk can be transmitted. Any coefficient whose magnitude falls outside the range given by these bits has to be truncated to the top of the range. This is a fairly standard technique in transform coding, but the exact trade-off between range limiting and saving bits is to be determined.

## 2.4 A fixed-length coding scheme

In our 2:1 bit-rate-reduction scheme, we have 32 bits for each block. Clearly, it is desirable to transmit as many bits as possible, starting with the most significant and going down. This is the same as quantizing the coefficients as finely as possible. The exact method of quantizing can be varied but, in the following description, quantizing the magnitude is effected simply by setting each untransmitted bit to zero. With straightforward transmission of each bit, not forgetting the signs, all of levels 6 and above of the luminance and two bits from level 5 may be transmitted. For U or V, we may transmit all of levels 4 and above and two bits from level 3. These figures are slightly pessimistic because a sign bit need only be transmitted if the quantized value of the corresponding coefficient magnitude turns out to be non-zero.

There is a disparity here between Y and UV. The UV is being quantized about four times as finely as the Y. A juggling act with the asterisks suggests that they will be quantized (as near as possible) equally accurately if each Y block is associated with a UV block and the pair coded with 40 bits for the Y block and 24 bits for the UV.

## 2.5 A variable-length coding scheme with a fixed number of bits per block

### 2.5.1 Correlation between bits

The scheme to be described below exploits the fact that the probability of each bit being '1' is often much smaller then 0.5. It may be thought worthwhile additionally to exploit the correlation between bits, both within each coefficient (i.e. vertically in the above tables) and between coefficients (horizontally). But, as the following results will show, there is very little correlation in either direction. This may not be surprising in the horizontal case, since the whole idea of a DCT is to provide decorrelated coefficients. What is more surprising is that the bits within a coefficient are uncorrelated. But, as Appendix B shows, that is exactly true if the coefficient magnitudes are distributed with a one-sided Laplacian (i.e. exponential) probability distribution. Measurements have shown that the Laplacian distribution is a good model.

The tables 3 and 4 below illustrate, using the luminance signal, the property that the bits are nearly uncorrelated. The Table 3, generated from a first test image has a pair of main entries for each coefficient. One entry is the entropy of the coefficient, all the eleven (or fewer) bits being taken together. The other entry is the sum of the entropies of the individual bits in the coefficient. The difference between them is a direct measure of the benefit of exploiting the correlation between the bits.

For a second test image the totals are 35.07 and 36.77, a difference of 1.70. In both cases the only coefficient for which the correlation assertion really breaks down in the dc one.

The Table 4 gives the equivalent results in the other direction. The main entries in the table are, for each bit level, the entropy of the eight (or fewer) bits (one for each coefficient) at that level, taken together, and the sum of the entropies of the individual bits.

For the second test image referred to above the totals are 36.17 and 36.77, a difference of 0.60. From this it can be concluded that corresponding bits in different coefficients are hardly correlated at all. Similar arguments and results apply to the U and V signals.

### 2.5.2 Entropies of the individual bits

3

Table 5 below gives the entropy of each individual bit, for the luminance. The smallness of each figure gives an indication of how much potential benefit there is from variable-length coding. The figures do not tally with the above tables. This is because these figures are obtained from the eight pictures, rather than just one.

### 2.5.3 Description of the coding scheme

We now come to the suggested coding scheme itself. In its simplest version, the eight (or fewer) bits in each level are taken together and encoded with a variable-length code such as a Huffman code (HUFFMAN, D.A., 1957 - Proc. IRE, 40, 9, pp.1098-1101). This is done not to exploit the correlation between the bits, which has been shown to be negligible, but simply because single bits cannot benefit from variable-length coding. The variable-length coding is carried out starting with the top level (a trivial case here) and going down one level at a time. A running total of the number of bits needed so far (including any bits needed to convey the signs) is kept and the coding proces is stopped when that total exceeds the number of bits available. Thus, all the levels higher than that last level are successfully encoded.

There are one or two refinements to this simple version of the scheme. One is to merge the top few levels together in order to increase the efficiency of the variable-length coding. The other is to split the lower levels into smaller chunks so that not so many bits are wasted at the end of the coding process. In a first simulation, the levels are merged and split as follows.

Luminance: Levels 9-11: merge together
Levels 3-4: split each into groups of three bits and five bits
Levels 1-2: split each into two groups of four bits
Colour difference: Levels 7-9: merge together
Level 2: split into groups of three bits and five bits
Level 1: split into two groups of four bits

This arrangement was arrived at by trial and error, based on the efficiency of the Huffman codes generated from various combinations of merged and split groups. There is, perhaps surprisingly, a substantial benefit to be had from including the dc bits in their appropriate groups rather than coding them separately, despite the fact that their entropies are very close to 1.

Another variation, if the Y and UV blocks can share their 64 bits, is to use the bits wasted in the Y coding as extra bits for the UV coding, or vice versa.

### 2.5.4 Generating the Huffman codes

Because the bits are uncorrelated, the Huffman codes can be generated using suitable combinations of the individual bit probabilities. For example, if four bits have probabilities (of being '1') of $p_1$, $p_2$, $p_3$ and $p_4$, then the probability of the four- bit word being '1101', used in the generation of the Huffman code, is $p_1p_2(1-p_3)p_4$.

The Huffman codes generated for the groups of bits described in 2.5.4 are very efficient. The Tables 6 and 7 below compare the average bit rate of the Huffman code in each group with the entropy of each group.

One problem with the colour difference is that the Huffman code generated for the six bits of levels 9-7 has a maximum codeword length of 31 bits. Consequently, in certain cases the first UV codeword will be too long and no UV information at all will be transmitted. It is a fairly simple matter, as shown in Appendix C to modify the Huffman code slightly to limit the maximum codeword length. In the present example, the longest codeword was limited to 21 bits, so that even in the worst case the first codeword will be transmitted along with the three associated sign bits. It has been found that this modification does not measurably affect the efficiency of the Huffman code.

From the above tables it can be deduced that, as for the fixed-length case, a suitable assignment of bits is to use 40 for the Y and 24 for the UV.

### 2.5.5 Run-length coding

A largely equivalent approach to Huffman coding on grounds of bits is run-length coding of zeros, treating all the bits to be encoded as a continuous stream. For maximum efficiency, a different run-length code should be used for each possible starting-point in the table of bits. Each run-length code should be variable-length code, ideally a Huffman code generated from the associated probability distribution of run-lengths of zeros.

### 2.6 An adaptive scheme

One problem with the above scheme is that, even if some measures have been taken to limit the maximum length of variable-length codes, a few critical blocks are coded very coarsely. Such blocks would have been coded more accurately by the fixed-length coding scheme. The problem can be overcome by an adaptive approach in which the variable-length coding scheme is used for the block only if it produces a more accurate result (i.e. stops at a lower level in the table of bits) than the fixed-length scheme. This involves an additional signalling overhead of one bit per block.

### 2.7 A simple scheme not involving variable-length coding

A simpler approach is one which does not use variable-length coding but which still exploits the fact that the most significant few bits of each coefficient are very likely to be zero. The idea is to transmit a range word which gives the smallest number of most significant zeros in any coefficient (considering only the allowed bits, of course). Then the bits of lower significance are transmitted using a fixed-length coding scheme.

### 2.8 A note on error performance

The fixed-length coding scheme is clearly very rugged in the presence of transmission errors. Variable-length coding tends to extend the effect of errors, through this problem can be mitigated to some extent when designing the codes. In the variable-length system, an error can at worst only affect bits of lower significance within the block. Provided that bits are transmitted in correct order, this is true even in the case where wasted Y bits are used for the UV.

### 3.1 Coding schemes

The following coding schemes were simulated. In all cases 40 bits were allocated to each Y block and 24 to each UV block.
Fixed : The fixed-length coding scheme of Section 2.4.
Variable : The variable-length coding scheme of Section 2.5.
Adaptive : The adaptive coding scheme of Section 2.6

### 3.2 Picture material

The following pictures were used:
Test frame 1 (1 input frame, 4 output frames; see below)
Test frame 2 (20 frames)
Test frame 3 (1 frame)
Test frame 4 (1 frame)
In the case of Test frame 1, a simulation of the effect of slow motion was achieved by moving the DCT blocks at two Y samples or one UV sample per field, producing a pattern that repeats after four frames. This turned out to be a very critical picture for subjective assessment.

### 3.3 Objective results

The following results are quoted in Table 8 below:

| S/N | The signal-to-noise ratio, in dB, of the decoded signal with respect to a maximum peak-to-peak signal; |
|-----|---|
| Mean level | The mean bit level reached by the coding process, averaged across the eight coefficients; |
| % wasted | The number of wasted bits, expressed as a percentage of the transmitted component bit rate. |
| % fixed | The percentage of blocks transmitted using the fixed-length coding scheme. |
| % limits | The percentage of blocks in which one or more coefficients are range limited. |

### 3.3.1 Explanation

Wasted bits in fixed-length coding: these occur when there is one remaining bit available but transmission of the next bit in the table would also entail transmission of an associated sign bit. In some of the simulations, this wasted bit was used for the UV coding as in the variable-length cae, but the effect proved negligible.

Higher signal-to-noise ratio for variable-length coding than for fixed-length coding: In test frame 2 there are some active luminance blocks that are coded very inaccurately by the variable-length coding scheme. These have a large adverse effect on the S/N figure. To the coding scheme, all the bits have equal importance. What is lost at higher levels is more than regained at lower levels, as can be seen from the mean level figures. The S/N turns out not to be a very good measure of quality because in some cases the high activity of a block masks the resulting large coding errors. But if masking cannot be exploited, for example in contribution quality coding or even in slowly moving pictures (where the changes from frame to frame are easily visible), then either the adaptive scheme or a variable-length scheme in which the variable-length codes for the upper levels are very mild will have to be used.

Slightly worse signal-to-noise and mean level figures for the adaptive scheme than for the variable-length coding scheme; These occasional small effects are explained by the loss of one bit per block in the adaptive scheme for signalling whether fixed- or variable-length coding is being used.

### 3.3.2 General conclusions

The results show that, on average, the variable-length and adaptive schemes reach a much lower level in the table of bits than the fixed-length scheme. The gains in signal-to-noise ratio are not so spectacular, but they are significant, amounting to 1.8 dB for Y and 2.7 dB for UV in the case of the adaptive scheme.

### APPENDIX A - TABLES

TABLE 1

| Coefficient | dc-1 | 2 | 3 | 4 | 5 | 6 | 7 | 8 |
|-------------|------|---|---|---|---|---|---|---|
| Y factor | 5.66 | 4 | 2 | 1 | 1 | 0.5 | 0.5 | 0.25 |
| UV factor | 1.41 | 1 | 1 | 0.5 | 0.5 | 0.5 | 0.25 | 0.25 |

6

TABLE 2

| Luminance | | | | | | | | | Color difference | | | | | | | | |
|---|---|---|---|---|---|---|---|---|---|---|---|---|---|---|---|---|---|
| | Coefficient | | | | | | | | | Coefficient | | | | | | | |
| Bit level | 1 | 2 | 3 | 4 | 5 | 6 | 7 | 8 | Bit level | 1 | 2 | 3 | 4 | 5 | 6 | 7 | 8 |
| msb 11 | * | | | | | | | | msb 11 | | | | | | | | |
| 10 | * | * | | | | | | | 10 | | | | | | | | |
| 9 | * | * | * | | | | | | 9 | * | | | | | | | |
| 8 | * | * | * | * | * | | | | 8 | * | * | . | | | | | |
| 7 | * | * | * | * | * | . | . | | 7 | * | * | * | . | . | . | | |
| 6 | * | * | * | * | * | * | * | . | 6 | * | * | * | * | . | . | . | . |
| 5 | * | * | * | * | * | * | * | . | 5 | * | * | * | * | * | * | . | . |
| 4 | * | * | * | * | * | * | * | * | 4 | * | * | * | * | * | * | * | . |
| 3 | * | * | * | * | * | * | * | * | 3 | * | * | * | * | * | * | * | * |
| 2 | * | * | * | * | * | * | * | * | 2 | * | * | * | * | * | * | * | * |
| lsb 1 | * | * | * | * | * | * | * | * | lsb 1 | * | * | * | * | * | * | * | * |

TABLE 3

| Coefficient | 1 | 2 | 3 | 4 | 5 | 6 | 7 | 8 | Total |
|---|---|---|---|---|---|---|---|---|---|
| H of coeff. | 8.87 | 6.95 | 5.36 | 4.05 | 3.69 | 2.51 | 2.05 | 0.62 | 34.10 |
| (H of bits) | 9.43 | 7.07 | 5.46 | 4.10 | 3.74 | 2.55 | 2.09 | 0.62 | 35.06 |
| Difference | 0.56 | 0.12 | 0.10 | 0.05 | 0.05 | 0.04 | 0.04 | 0.00 | 0.96 |

TABLE 4

| Bit level | H of 8 bits | (H of bits) | Difference |
|---|---|---|---|
| 11 | 0.30 | 0.30 | 0.00 |
| 10 | 0.79 | 0.79 | 0.00 |
| 9 | 1.28 | 1.28 | 0.00 |
| 8 | 1.54 | 1.55 | 0.01 |
| 7 | 1.94 | 1.96 | 0.02 |
| 6 | 2.49 | 2.55 | 0.06 |
| 5 | 3.27 | 3.38 | 0.11 |
| 4 | 4.15 | 4.27 | 0.12 |
| 3 | 5.39 | 5.47 | 0.08 |
| 2 | 6.55 | 6.60 | 0.05 |
| 1 | 6.89 | 6.92 | 0.03 |
| Total | 34.59 | 35.06 | 0.47 |

TABLE 5

| Bit level | Coefficient | | | | | | | | Total |
|---|---|---|---|---|---|---|---|---|---|
| | 1 | 2 | 3 | 4 | 5 | 6 | 7 | 8 | |
| 11 | 0.84 | | | | | | | | 0.84 |
| 10 | 0.89 | 0.07 | | | | | | | 0.96 |
| 9 | 0.99 | 0.25 | | | | | | | 1.24 |
| 8 | 0.99 | 0.46 | 0.13 | | | | | | 1.58 |
| 7 | 1.00 | 0.64 | 0.34 | 0.06 | 0.03 | | | | 2.07 |
| 6 | 0.99 | 0.76 | 0.54 | 0.26 | 0.17 | 0.02 | | | 2.74 |
| 5 | 1.00 | 0.88 | 0.70 | 0.48 | 0.40 | 0.10 | 0.03 | | 3.59 |
| 4 | 0.99 | 0.94 | 0.84 | 0.68 | 0.60 | 0.29 | 0.16 | 0.02 | 4.52 |
| 3 | 0.98 | 0.97 | 0.94 | 0.84 | 0.83 | 0.56 | 0.39 | 0.05 | 5.56 |
| 2 | 0.98 | 0.98 | 0.97 | 0.96 | 0.93 | 0.84 | 0.73 | 0.20 | 6.59 |
| 1 | 0.92 | 0.98 | 0.98 | 0.98 | 0.97 | 0.98 | 0.97 | 0.64 | 7.42 |
| Total | 10.57 | 6.93 | 5.44 | 4.26 | 3.93 | 2.79 | 2.28 | 0.91 | 37.11 |

TABLE 6

| Luminance | | | |
|---|---|---|---|
| Bit level | No. raw bits | Entropy | Bit rate |
| 11-9 | 6 | 3.15 | 3.19 |
| 8 | 5 | 1.68 | 1.78 |
| 7 | 5 | 2.22 | 2.30 |
| 6 | 7 | 2.93 | 2.97 |
| 5 | 7 | 1.91 | 1.97 |
| 4 (bits 1-3) | 3 | 2.80 | 2.83 |
| 4 (bits 4-8) | 5 | 1.91 | 1.97 |
| 3 (bits (1-3) | 3 | 2.91 | 2.94 |
| 3 (bits (4-8) | 5 | 2.82 | 2.85 |
| 2 (bits 1-4) | 4 | 3.91 | 3.94 |
| 2 (bits 5-8) | 4 | 2.81 | 2.86 |
| 1 (bits 1-4) | 4 | 3.89 | 3.93 |
| 1 (bits 5-8) | 4 | 3.62 | 3.65 |
| Total | 62 | 38.43 | 39.04 |

TABLE 7

| Colour Difference | | | |
|---|---|---|---|
| Bit level | No. raw bits | Entropy | Bit rate |
| 9-7 | 6 | 1.34 | 1.55 |
| 6 | 4 | 1.25 | 1.44 |
| 5 | 6 | 1.71 | 1.79 |
| 4 | 7 | 2.54 | 2.58 |
| 3 | 8 | 3.79 | 3.80 |
| 2 (bits 1-3) | 3 | 2.89 | 2.93 |
| 2 (bits 4-8) | 5 | 2.69 | 2.72 |
| 1 (bits 1-4) | 4 | 3.98 | 4.00 |
| 1 (bits 5-8) | 4 | 3.62 | 3.65 |
| Total | 47 | 23.81 | 24.46 |

Appendix B - Algorithm for limiting the maximum codeword length

Suppose a Huffman code has been generated containing some codewords longer than M, the desired maximum length. The following algorithm modifies the code to ensure that no codeword is longer than M. No proof is offered for its optimality, but it generates codes that are only very slightly less efficient that the original.

For each value of $k$, set $n(k)$ to the number of codewords of length $k$ in the original code

For each value of $k$, starting from $1^{12}$, perform the next two steps

Remove codewords of length $k$ until the resulting maximum number of codewords of length $\geq k$ and $\leq M$ is greater than the current sum of $n(i)$ for $i \geq k$

For each codeword removed, add 1 to $n(k+1)$

Finally, assign the new set of codeword lengths to the messages in ascending order of original codeword length.

An algorithm which is guaranteed to be optimal is given in [7].

In practice, one can begin at a higher value of $k$. Experience with just one code will be enough to show this.

## Claims

1. A method of coding a signal for transmission, the method comprising dividing the signals into blocks containing a similar plurality of samples, coding each block utilising a coding operation which generates code words of varying length and selecting at least some of the said code words for transmission to form a transmission signal having a predetermined number of bits representing each signal block.

2. A method according to claim 1 in which the coding operation operates on individual bits or groups of bits selected from some or all of the plurality of samples in each block.

3. A method according to claim 2 in which the coding operation codes individual bits or groups of bits in order of decreasing significance.

4. A method according to any preceding claim in which the samples are subject to one or more pre-processing operations prior to the coding operation.

5. A method according to claim 4 in which the pre-processing operations include correction for perceptibility of the samples.

6. A method according to claim 4 or 5 in which the pre-processing operations include transform coding to generate a plurality of coefficients which are subject to the coding operation.

7. A method according to claims 5 and 6 in which the pre-processing to correct for perceptibility is carried out by multiplication of the transform coefficients by weighting factors.

8. A method according to claim 6 or 7 in which the transform coding is discrete cosine transform coding.

9. A method according to any preceding claim in which the coding operation generates Huffman codes.

10. A method according to any claims 1 to 8 in which the coding operation gneerates run-length codes.

11. A method according to any preceding claim in which the code words of varying length for groups of bits are designed on the basis that individual bits within each group are uncorrelated.

12. A method according to any preceding claim in which the coding operation is selected for each signal block in dependence on the samples forming the block to optimise coding quality for that block.

13. A method of coding a signal for transmission, the method being substantially as hereinbefore described.

14. A method of coding a multi-component signal according to any preceding claim in which blocks of samples from different components of the signal are subject together to the coding operation so that redundant bits from the predetermined number representing a block of samples of one component are used to increase the coding quality of a signal block from another component.

15. A method of decoding a signal, the method being the inverse of the method of any of claims 1 to 14.